Europäisches Patentamt

European Patent Office

Office européen des brevets

(11) Publication number: **0 464 271 A1**

## EUROPEAN PATENT APPLICATION

(21) Application number: **90201810.0**

(22) Date of filing: **06.07.90**

(51) Int. Cl.⁵: **B32B 27/34**, B32B 27/18

(43) Date of publication of application:
**08.01.92 Bulletin 92/02**

(84) Designated Contracting States:
**AT BE CH DE DK ES FR GB GR IT LI LU NL SE**

(71) Applicant: **STAMICARBON B.V.**
**Mijnweg 1**
**NL-6167 AC Geleen(NL)**

(72) Inventor: **Steffanie, Leonardus Gerardus**
**Lage Bongerd 45**
**NL-6116 BN Susteren(NL)**

(54) Multilayer laminated material, method for its manufacture, compatibilizing polyamide composition used therefor and method for its manufacture.

(57) A multilayer laminated material comprising
a) at least one layer comprising a polyamide (A), wherein the proportion of the number of carbon atoms to that of nitrogen atoms (C/N) in the polymer is in the range of 4 to 7;
b) at least one layer comprising a polyamide (B), wherein the proportion of the number of carbon atoms to that of nitrogen atoms (C/N) in the polymer is more than 7;
c) an intermediate layer provided between layers (a) and (b) comprising a compatibilizing polymer composition obtainable by masticating a mixture of said polyamides (A) and (B) at a temperature above the melting point of said mixture in the presence of a transamidation catalyst stable at this temperature,
a method for its manufacture, a compatibilizing polyamide composition used for said intermediate layer and a method for its manufacture are described.

The present invention relates to a multilayer laminated material, such as laminated sheet material or more preferably a multilayer laminated tube material, a method for its manufacture, a compatibilizing polyamide composition used for the manufacture of that multilayer laminated material and a method for the manufacture of said compatibilizing polyamide composition.

Polyamide resins are thermoplastic resins which have found wide industrial application based on their high thermal resistance, rigidity and fatigue resistance. It is known that the excellent thermal and mechanical properties of the polyamides depend on the degree of hydrogen bonding between the amide groups in the polyamide main chain and that the thermal and mechanical properties are improved with increasing concentration of amide groups. However, since the amide groups are hydrophilic, an increase in the concentration of said amide groups in the polyamide main chain causes an increase in the water absorption of the polyamide, which often affects mechanical properties or causes dimensional instability. Polyamide 6, polyamide 6.6 and polyamide 4.6, which have a relatively high amide group concentration, are disadvantageous in that when they come into contact with a metal halide compound, such as the salt used for the de-icing of the road surfaces, e.g. calcium chloride or zinc chloride formed by the reaction of road salt with zinc plated car body panels, molded articles produced from these polyamides suffer from the so-called environmental stress cracking, resulting in a certain degree of deterioration, which is very critical in case these articles are used for automobile parts, such as brake and fuel tubings. On the other hand, it is known that polyamide resins having lower amide group concentrations, such as polyamide 11 and polyamide 12 are relatively stable against environmental stress cracking in the presence of metal halides. However, these polyamides are unsatisfying with respect to their mechanical properties at higher temperatures which are encountered more and more in the engine compartments of modern automobiles.

It has therefore already been proposed to overcome these problems by means of a multilayer laminated material, for example a fuel tube comprising an inner layer of a polyamide having a relatively high amide group concentration, such as polyamide 6, and an outer layer of a polyamide having a relatively low amide group concentration, such as polyamide 12 (c.f. F. Kerschbaumer and B. Zeh "Kunststoffe", 78 (1988) 1095-1099). The multilayer laminated fuel tubes disclosed in this document are produced by the coextrusion of polyamide 6 providing the inner core and polyamide 12 providing the outer core and providing a barrier-polymer between these two layers.

Furtheron, polyamide laminate films comprising layers of polyamide 6 and polyamide 6.6 and, if desired, polyamide copolymers or mixtures thereof are known from JP-A-62 146 623 and JP-A-61 104 847, JP-A-57 034 953 discloses a resin tube obtained by coextruding an inner polyamide layer and an outer copolyamide layer, wherein the polyamide used typically is polyamide 6, polyamide 6.6, polyamide 6.10, polyamide 6.12, polyamide 11 or polyamide 12 or a copolymer comprising monomers of such polyamides.

While polyamide 4.6 - a polyamide substantially comprising repeating tetramethylene adipamide units is - because of its high temperature stability, elevated heat distortion properties and fuel resistance - well suited for the manufacture of articles used under high temperature conditions in the presence of mineral oil products, such as encountered in the engine compartment of automobiles, it has the disadvantage that it is not sufficiently stable against stress cracking in the presence of metal halide compounds, such as e.g. road salt. On the other hand polyamide 11 or polyamide 12 which are much more stable against environmental stress cracking in the presence of such metallic halide compounds, have the disadvantage that their heat distortion temperature is rather low, so that they cannot be used as such for the manufacture of plastic articles used under high temperature conditions.

A combination of both materials would yield the necessary properties, in that the inner core layer of a multilayer tube made of polyamide 4.6 would provide for the necessary mechanical and thermal stability while the outer layer of polyamide 11 or polyamide 12 would provide for the necessary protection of the former polyamide against environmental stress cracking. However, it has been found that these polyamides are highly incompatible, so that it is not possible to obtain the necessary adhesion between the layers made of these polyamides in a multilayer laminated material. The delamination of laminated articles made of polyamide 4.6 and polyamide 12 demonstrates the poor adhesion between these different polyamides. Furtheron the incompatibility can also be seen during compounding of a mixture of polyamides 4.6 and 12 by the severe swelling and breaking of the strand of mixed materials coming out of the die of the extruder.

The object of the present invention therefore is to overcome these problems and to develop a compatibilizing polyamide composition providing for the necessary adhesion between polyamides having a relatively high amide group concentration and polyamides having a relatively low amide group concentration and to thereby yield a multilayer laminated material which can easily be made by for instance coextrusion of these different types of polyamides and the compatibilizing polyamide composition.

It has now been surprisingly found that the delamination of a multilayer laminated material of the abovementioned different polyamides can be eliminated by providing between the layers forming the laminated material at least one intermediate layer comprising a compatibilizing polymer composition obtainable by masticating a mixture of said polyamides for a short time at a temperature above the melting point of said mixture in the presence of a transamidation catalyst stable at this temperature. Die swelling during extrusion of a mixture of these incompatible polyamides can also largely be overcome by adding said transamidation catalyst.

The subject matter of the present invention therefore is a multilayer laminated material comprising

a) at least one layer comprising a polyamide (A), wherein the proportion of the number of carbon atoms to that of nitrogen atoms (C/N) in the polymer is in the range of 4 to 7;

b) at least one layer comprising a polyamide (B), wherein the proportion of the number of carbon atoms to that of nitrogen atoms (C/N) in the polymer is more than 7;

c) an intermediate layer provided between layers (a) and (b) comprising a compatibilizing polymer composition obtainable by masticating a mixture of said polyamides (A) and (B) at a temperature above the melting point of said mixture in the presence of a transamidation catalyst stable at this temperature.

According to a preferred embodiment of the present invention the polyamide (A) is selected from polyamide 4 (C/N = 4), polyamide 4/6 (C/N = 5), polyamide 6 (C/N = 6), polyamide 6.6 (C/N = 6), polyamide 7 (C/N = 7) and copolymers thereof. In consideration of its excellent thermoresistance and rigidity polyamide 4.6 is preferably used. If the polyamide (A) has a C/N ratio of less than 4, the product exhibits a high melting point, which affects the moldability. In case the polyamide (A) has C/N ratio of more than 7, it is difficult to obtain sufficient thermal resistance and rigidity.

The polyamide (B) is preferably selected from polyamide 6.10 (C/N = 8), polyamide 6.12 (C/N = 9), polyamide 11 (C/N = 11) and polyamide 12 (C/N = 12). Polyamide 11 and polyamide 12 are preferred in consideration of the excellent resistance to metal halide compounds. Other examples of the polyamide (B) are polyamides containing an aromatic or aricyclic component in the main chain. If the polyamide (B) has a C/N ratio of only 9 or less, sufficient resistance to the metal halide compounds is not obtained.

The transamidation catalyst used in the manufacture of the compatibilizing polyamide composition is important, because it has been found that normal transamidation catalysts, such as p-toluenesulfonic acid, are not operable at these high operating temperatures, and that it is necessary to make use of a transamidation catalyst which is stable at the melt mixing temperature of the compatibilizing polyamide composition. Such transamidation catalysts useful in the present invention have been disclosed by R.E. Wilfong (J. Polym. Sci. 54 (19) 385). Preferred transamidation catalysts are inorganic transamidation catalysts, more preferably those selected from the group comprising lithium, sodium, potassium, calcium, beryllium, magnesium, zinc, cadmium, strontium, aluminum, lead, chromium, molybdenum, titanium, manganese, iron, cobalt, germanium, nickel, copper, silver, mercury, tin, platinum, boron, antimony, bismuth, palladium and cerium as the metal or in oxidic form. Specifically preferred as the transamidation catalyst is $Sb_2O_3$, which yields a compatibilizing polymer composition providing an excellent adhesion between said polyamides (A) and (B).

The compatibilizing polymer composition used for the manufacture of the intermediate layer (c) between layer (a) of polyamide (A) and layer (b) of polyamide (B) is obtainable by masticating a mixture of said polyamides (A) and (B) in the presence of the transamidation catalyst referred to above, preferably $Sb_2O_3$, at a temperature above the melting point of said mixture, preferably at a temperature in the range of 290 to 330°C. This masticating can be carried out in a Banbury mixer or preferably in an extruder, more preferably a twin-screw extruder, using a residence time depending from the temperature, the transamidation catalyst, the catalyst concentration, the number of end groups in the polyamides and being preferably selected to be 10 to 200 sec. According to a preferred embodiment of the invention, such a compatibilized polymer composition can be pre-manufactured as a pelletized material and used in the coextrusion with the other two polyamides (A) and (B) as necessary.

According to a preferred embodiment of the present invention, the multilayer laminated material comprises a multilayer laminated tubing comprising an inner core layer of polyamide 4.6, and intermediate layer of the compatibilizing polymer composition and an outer layer of polyamide 11 or polyamide 12, wherein the thicknesses of said intermediate and outer layers providing the necessary protection against environmental stress cracking can be varied as desired and preferably is 2 to 20%, preferably 5 to 10% of the total wall thickness of the multilayer laminated material. Of course the intermediate and outer layers (c) and (b) respectively may have the same or different thicknesses as necessary.

A further subject matter of the present invention is a method for the manufacture of the above multilayer laminated material, which is characterized by coextruding at least one layer of said polyamide (A), at least one layer of said polyamide (B), and at least one intermediate layer between said layers comprising the compatibilizing polymer composition. This coextrusion can be carried out by making use of methods and apparatus known per se, such as coextrusion apparatus comprising three different extruders for providing the melts of the material for layers (a), (b) and (c) and a multilayer die producing the multilayer laminated material, such as a sheet material, a tube material and so on.

The invention furtheron comprises a compatibilizing polyamide composition used for providing the intermediate layer (c) between layers (a) and (b) made of polyamides (A) and (B), respectively. This compatibilizing polyamide composition is obtainable by masticating, kneading or mixing a mixture of at least one polyamide (A), wherein the proportion of the number of carbon atoms to that of nitrogen atoms (C/N) in the polymer is in the range of 4 to 7 with at least one polyamide (B), wherein the proportion of the number of carbon atoms to that of nitrogen atoms (C/N) in the polymer is more than 7 at a temperature above the melting point of said mixture in the presence of a transamidation catalyst stable at this temperature.

This compatibilizing polyamide composition may contain the preferred polyamides (A) and (B) referred to above.

According to a preferred embodiment of the invention the compatibilizing polyamide composition comprises 90 to 30 parts by weight, more preferably 70 to 40 prats by weight and still more preferably 50 to 60 parts by weight of said polyamide (A), more preferably polyamide 4.6, and correspondingly 10 to 70 parts by weight, more preferably 30 to 60 parts by weight and still more preferably 50 to 40 parts by weight of said polyamide (B), more preferably polyamide 11 and/or polyamide 12, based on 100 parts by weight of said mixture.

The invention furtheron covers a method for the manufacture of said compatibilizing polyamide composition, which is characterized by melt-mixing a mixture of said polyamides (A) and (B) in the presence of 0.1 to 10% by weight, preferably 0.2 to 5% by weight and more preferably 0.3 to 1% by weight, preferably 0.2 to 5% by weight and more preferably 0.3 to 1% by weight of said transamidation catalyst, preferably $Sb_2O_3$. The melt-mixing can be carried out making use of usual mixing equipment, such as a Banbury mixer an extruder or more preferably a twin-screw extruder, which is operated a temperature above the melting point of the mixture, preferably at a temperature of 290 to 330°C. The residence time of the mixture in the masticating apparatus depends from the temperature, the transamidation catalyst, the catalyst concentration, the number of end groups in the polyamides and preferably is selected to be 10 to 200 sec. Also in this method of the invention the most preferred transamidation catalysts used for the manufacture of said compatibilizing polyamide composition is $Sb_2O_3$.

The polyamides (A) and (B) and the compatibilizing polymer composition used according to the present invention may contain usual additives, such as stabilizers, fillers, reinforcing fiber materials, lubricants that do not have a negative effect on the adhesive strength, pigments, colorants, impact modifiers, flame retardants, other common additives and other polymers.

Examples of fibrous fillers which can be used in the present context are glass fibers, carbon fibers, aramide fibers, steel fibers and single crystal whiskers. However, the invention is not limited to these filler examples. Any substance may be used which leads to the desired properties and does not prevent the manufacture of the multilayer laminated material.

The proportional amount of the fibrous fillers is preferably in the range of 5 to 100 parts by weight, more preferably 10 to 100 parts by weight and even more preferably 15 to 80 parts by weight, based on 100 parts by weight of the polyamide (A), the polyamide (B) and/or the compatibilizing polymer composition.

Specific examples of fillers are clay, calcined clay, talc, catalpo, silica, alumina, magnesium oxide, calcium silicate, asbestos, sodium aluminate, calcium aluminate, sodium aluminosilicate, magnesium silicate, aluminum hydroxide, calcium hydroxide, barium sulfate, potassium aluminate, sodium aluminate, iron aluminate, sand, glass spheres, carbon black, zinc oxide, antimony trioxide, boric acid, borax, zinc borate, metal powder, metallic whiskers, mica, graphite, titanium oxide, wollastonite, aramide fibers, carbon fibers, glass fibers, glass fiber powder, glass beads, calcium carbonate, zinc carbonate, hydrotalcite, and iron oxide. These fillers may have been subjected to various surface treatments such as with silane coupling agents or metal shielding. They can be used singly or in combination. The way of blending of these fillers with the polyamide composition is not specifically limited and can be accomplished by any known method.

Because of its excellent resistance against metallic halide compounds and its processability such as by coextrusion or injection molding, the multilayer laminated material according to the present invention allows for a wide range of application in automobile parts, such as brake piping, fuel piping, electrical parts, such as cable insulatings, and mechanical parts, such as pipes, tubes, oil seals and bearings.

The multilayer laminated material according to the present invention can be obtained by common methods known to the skilled man in the art and include dry blending and melt-mixing of the starting materials for instance in a Banbury mixer or an extruder and further processing the polyamides (A) and (B) and the compatibilizing polymer composition by means of a coextrusion, press-laminating, co-injection molding, blow molding etc.

The present invention is further illustrated by the following example and comparative example, but it should not be construed as being limited thereto.

Example

For the manufacture of a multilayer laminated material polyamide 4.6 (TW 441 or TW 400 manufactured and sold by DSM, The Netherlands) having a relative viscosity of about 4 (determined at 25°C in 1 g/100 ml solution in 96% $H_2SO_4$) and polyamide 12 (Vestamid L2140 manufactured and sold by Hüls, Germany) having a high molecular weight are used.

For the manufacture of the compatibilizing polyamide composition 60 parts by weight of said polyamide 4.6 and 40 parts by weight of said polyamide 12 have been melt-mixed in the presence of 0.5% by weight of $Sb_2O_3$ in an extruder at a temperature of 300°C for 20 sec.

Thereafter, a multilayer sheet was produced by coextruding a 1 mm thick layer of polyamide 4.6, an intermediate layer of said compatibilizing polyamide composition of 0.15 mm and a layer of polyamide 12 of 0.5 mm thickness.

The adhesion strength between the polyamide 4.6 layer and the polyamide 12 layer was determined by a peeling test which was carried out at room temperature and after keeping the laminated material over night at a temperature of 100 to 120°C. In both cases it was not possible to delaminate the multilayer laminated material according to the present invention. It was furtheron not possible to introduce a raiser blade between these two layers, so that therefore an unexpected high adhesion force is provided by the use of the compatibilizing polymer composition of the present invention.

Comparative Example

The Example is repeated with the difference that said polyamide 4.6 and said polyamide 12 are coextruded without providing an intermediate layer of a compatibilizing polymer composition.

When checking the physical properties of this laminated material, bending around a sharp edge caused delamination and it was easy to peel off the polyamide 12 layer even before carrying out the additional heat treatment of the multilayer laminated material for 8 hours at 100 to 120°C.

Therefore, these examples demonstrate the unexpected high adhesion strength provided by the compatibilizing polymer composition of the present invention introduced as an intermediate layer between said layers of polyamide 4.6 and polyamide 12.

**Claims**

1. A multilayer laminated material comprising
   a) at least one layer comprising a polyamide (A), wherein the proportion of the number of carbon atoms to that of nitrogen atoms (C/N) in the polymer is in the range of 4 to 7;
   b) at least one layer comprising a polyamide (B), wherein the proportion of the number of carbon atoms to that of nitrogen atoms (C/N) in the polymer is more than 7;
   c) an intermediate layer provided between layers (a) and (b) comprising a compatibilizing polymer composition obtainable by masticating a mixture of said polyamides (A) and (B) at a temperature above the melting point of said mixture in the presence of a transamidation catalyst stable at this temperature.

2. The multilayer laminated material according to claim 1, characterized in that said polyamide (A) is selected from polyamide 4, polyamide 6, polyamide 6.6, polyamide 7, polyamide 4.6 and copolymers thereof, and preferably is polyamide 4.6 and said polyamide (B) is selected from polyamide 6.10, polyamide 6.12, polyamide 11, polyamide 12 and copolymers thereof, and preferably is polyamide 11 and/or polyamide 12.

3. The multilayer laminated material according to claims 1 or 2, characterized in that the transamidation catalyst is an inorganic transamidation catalyst.

4. The multilayer laminated material according to claim 3, characterized in that said transamidation catalyst is selected from the group comprising lithium, sodium, potassium, calcium, beryllium, magnesium, zinc, cadmium, strontium, aluminum, lead, chromium, molybdenum, titanium, manganese, iron, cobalt, germanium, nickel, copper, silver, mercury, tin, platinum, boron, antimony, bismuth, palladium and/or cerium as the metall or in oxidic form.

5. A method for the manufacture of the multilayer laminated material according to any one of claims 1 to 4, characterized by coextruding at least one layer of said polyamide (A), at least one layer of said polyamide (C) and at least one intermediate layer comprising the compatibilizing polymer composition between said layers.

6. A compatibilizing polyamide composition obtainable by masticating a mixture of at least one polyamide (A), wherein the proportion of the number of carbon atoms to that of nitrogen atom (C/N) in the polymer is in the range of 4 to 7 with at least one polyamide (B), wherein the proportion of the number of carbon atoms to that of nitrogen atoms (C/N) in the polymer is more than 7 at a temperature above the melting point of said mixture in the presence of a transamidation catalyst stable at this temperature.

7. The compatibilizing polyamide composition according to claim 6, characterized in that said polyamide (A) is selected from polyamide 4, polyamide 6, polyamide 6.6, polyamide 7, polyamide 4.6 and copolymers thereof, and preferably is polyamide 4.6 and said polyamide (B) is selected from polyamide 6.10, polyamide 6.12, polyamide 11, polyamide 12 and copolymers thereof, and preferably is polyamide 11 and/or polyamide 12.

8. The compatibilizing polyamide composition according to any one of claims 6 to 7, characterized by comprising 90 to 30 parts by weight of said polyamide (A) and 10 to 70 parts by weight of said polyamide (B) based on 100 parts by weight of said mixture.

9. The compatibilizing polyamide composition according to any one of the claims 6 to 8, characterized in that said transamidation catalyst is an inorganic transamidation catalyst.

10. The compatibilizing polyamide composition according to claim 9, characterized in that said transamidation catalyst is selected from the group comprising lithium, sodium, potassium, calcium, beryllium, magnesium, zinc, cadmium, strontium, aluminum, lead, chromium, molybdenum, titanium, manganese, iron, cobalt, germanium, nickel, copper, silver, mercury, tin, platinum, boron, antimony, bismuth, palladium and cerium as the metall or in oxidic form.

11. A method for the manufacture of the compatibilizing polyamide composition according to any one of claims 6 to 10, characterized by melt-mixing a mixture of said polyamids (A) and (B) in the presence of 0.1 to 10% by weight, preferably 0.2 to 5% by weight of the transamidation catalyst as defined in any one of claims 9 or 10.

12. The method according to claim 11, characterized by melt-mixing at a temperature of between 290 to 330°C.

13. The method according to claim 11 or 12, characterized by carrying out the melt-mixing in a Banbury mixer or an extruder, preferably a twin-screw extruder.

14. The method according to any one of claims 11 to 13, characterized in that said transamidation catalyst is an inorganic transamidition catalyst.

15. The method according to claim 14, characterized in that said transamidation catalyst is selected from the group comprising lithium, sodium, potassium, calcium, beryllium, magnesium, zinc, cadmium, strontium, aluminum, lead, chromium, molybdenum, titanium, manganese, iron, cobalt, germanium, nickel, copper, silver, mercury, tin, platinum, boron, antimony, bismuth, palladium and cerium as the metall or in an oxidic form.

16. A multilayered material, a method for its production, a compatibilizing polyamide composition for the multilayer material and a method for its production as essentially described in the description and the examples.

European
Patent Office

EUROPEAN SEARCH
REPORT

Application Number

EP 90 20 1810

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-4 861 838 (KHANNA)<br>* column 2, line 8 - column 3, line 19 * * column 3, line 54 - column 6, line 14 * * column 7, line 26 - column 7, line 31 * * column 7, line 52 - column 8, line 2; claims 1, 2, 5, 12, 13 *<br>– – – | 1,3,5-7,9, 11-14,16, 2,7,8 | B 32 B 27/34<br>B 32 B 27/18 |
| A | EP-A-0 358 038 (VISKASE CORPORATION)<br>* page 4, line 33 - page 6, line 27 * * page 7, line 1 - page 7, line 10 * * CLAIMS 1, 2, 4, 6, 10, 13, 19, 24, 25, 31, 33, 36, 44, 47-49, 51, 61 *<br>– – – | 1,2,6-8, 13,16 | |
| A | WO-A-0 000 000 (LATEST)Accession No 87-219090 Week 31 Derwent Publications Ltd, London GB & JP-A-62146623 (DAICEL CHEM IND KK) 30-06-87<br>– – – | 1,2,5-7, 13,16 | |
| A | WO-A-0 000 000 (LATEST)Accession No 86-172715 Week 27 Derwent Publications Ltd, London GB & JP-A-61104847 (UNITIKA KK) 23-05-86<br>– – – – – | 16 | |

| TECHNICAL FIELDS SEARCHED (Int. Cl.5) |
|---|
| B 32 B<br>C 08 L |

The present search report has been drawn up for all claims

| Place of search | Date of completion of search | Examiner |
|---|---|---|
| The Hague | 13 March 91 | DERZ T. |